# EUROPÄISCHE PATENTSCHRIFT

(11) **EP 3 371 239 B1**
(45) Veröffentlichungstag und Bekanntmachung des Hinweises auf die Patenterteilung: **28.08.2019**
(21) Anmeldenummer: 16785453.8
(22) Anmeldetag: 21.10.2016
(51) Int. Cl.: C08G 18/62, C09D 5/44

(54) **VERFAHREN ZUR HERSTELLUNG EINES WÄSSRIGEN BINDEMITTELS**
METHOD FOR PRODUCING AN AQUEOUS BINDER
PROCÉDÉ DE PRÉPARATION D'UN LIANT AQUEUX

(30) Priorität: 06.11.2015 EP 15193429
(43) Veröffentlichungstag der Anmeldung: 12.09.2018
(73) Patentinhaber: BASF SE, 67056 Ludwigshafen am Rhein (DE)
(72) Erfinder: MICHL, Kathrin, 67063 Ludwigshafen (DE); SMIT, Theo, 69117 Heidelberg (DE); SCHILLING, Holger, 69488 Birkenau (DE); FAUL, Dieter, 67150 Niederkirchen (DE)
(74) Vertreter: BASF IP Association
(86) Internationale Anmeldenummer: PCT/EP2016/075349
(87) Internationale Veröffentlichungsnummer: WO 2017/076661

(56) Entgegenhaltungen:
- EP-A1- 2 072 578
- WO-A1-2013/024084

## Beschreibung

Gegenstand der vorliegenden Erfindung ist ein Verfahren zur Herstellung eines wässrigen Bindemittels umfassend wenigstens eine Polycarbonsäure A, wenigstens eine organische Verbindung B, welche wenigstens zwei Hydroxylgruppen aufweist (Polyol B) und wenigstens eine Phosphorverbindung C, welches dadurch gekennzeichnet ist, dass in einem ersten Verfahrensschritt

| | |
|---|---|
| ≥ 50 und ≤ 100 Gew.-Teile | wenigstens einer α,β-monoethylenisch ungesättigten Mono- oder Dicarbonsäure und/oder deren Anhydrid (Monomer A1), und |
| ≥ 0 und ≤ 50 Gew.-Teile | wenigstens einer anderen ethylenisch ungesättigten Verbindung, welche mit den Monomeren A1 copolymerisierbar ist (Monomer A2), |

wobei sich die Gesamtmengen der Monomeren A1 und A2 zu 100 Gew.-Teilen addieren [Gesamtmonomerenmenge], in einem wässrigen Medium in Anwesenheit von ≥ 0,5 und ≤ 50 Gew.-%, bezogen auf die Gesamtmonomerenmenge, wenigstens eines anorganischen Hydrogensulfitsalzes, radikalisch zur Polycarbonsäure A polymerisiert werden, danach in einem zweiten Verfahrensschritt in der erhaltenen wässrigen Lösung der Polycarbonsäure A (Polycarbonsäure-Lösung) der Gehalt an freiem, nicht umgesetzten Hydrogensulfit, gerechnet als Natriumhydrogensulfit (NaHSO₃), auf eine Menge ≤ 1000 ppm, bezogen auf die Polycarbonsäure-Lösung, reduziert wird und erst danach in einem dritten Verfahrensschritt die Phosphorverbindung C entweder der Polycarbonsäure-Lösung, dem Gemisch aus Polycarbonsäure-Lösung und Polyol B und/oder während der Mischung von Polycarbonsäure-Lösung und Polyol B zugegeben wird.

Die vorliegende Erfindung umfasst ebenfalls die nach dem erfindungsgemäßen Verfahren zugänglichen wässrigen Bindemittel sowie deren Verwendung zur Herstellung von Formköpern aus körnigen und/oder faserförmigen Substraten.

Es ist dem Fachmann geläufig, wässrige Bindemittelsysteme umfassend eine polymere Polycarbonsäuren und Polyole als formaldehydfreie, thermisch härtbare Bindemittel zur Herstellung von Faserplatten, Faservliesen aber auch Spanplatten einzusetzen (siehe hierzu beispielsweise EP-A 882074, EP-A 882093, EP-A 882094, EP-A 583086 oder EP-A 651088).

Aus der US-A 4,076,917 sind Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A 445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Die EP-A 672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A 2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

In der US-A 2004/82689 werden formaldehydfreie wässrige Bindemittel zur Herstellung von Faservliesen, insbesondere Glasfaservliesen, offenbart, welche essentiell aus einer polymeren Polycarbonsäure, einem Polyol und einem Imidazolin-Derivat bestehen. Die erhaltenen gebundenen Faservliese sollen eine reduzierte Wasseraufnahme aufweisen. Es werden unspezifisch sowohl stickstoffhaltige als auch stickstofffreie Polyole offenbart, wobei jedoch insbesondere das stickstoffhaltige Triethanolamin als bevorzugt beschrieben wird. Als spezifische Imidazolin-Derivate werden Umsetzungsprodukte aus einer Fettsäure mit Aminoethylethanolamin oder Diethylentriamin genannt. Die offenbarten wässrigen Bindemittelzusammensetzungen enthalten einen phosphorhaltigen Reaktionsbeschleuniger.

Gemäß der WO 99/09100 sind thermisch härtbare Zusammensetzungen und deren Verwendung als formaldehydfreie Bindemittel zur Herstellung von Formkörpern offenbart, welche neben einem Alkanolamin mit wenigstens zwei OH-Gruppen, ein Polymerisat 1, welches ≤ 5 Gew.-% und ein weiteres Polymerisat 2, welches ≥ 15 Gew.-% einer α,β-ethylenisch ungesättigten Mono- oder Dicarbonsäure in einpolymerisierter Form enthält.

Des Weiteren offenbart die WO 10/34645 wässrige Bindemittelsysteme für körnige und/oder faserförmige Substrate, welche als wirksame Bestandteile ein Polymerisat 1, enthaltend ≥ 5,5 Gew.-% und ≤ 20 Gew.-% einer α,β-ethylenisch ungesättigten Mono- oder Dicarbonsäure in einpolymerisierter Form, ein Polymerisat 2, enthaltend ≥ 40 Gew.-% einer α,β-ethylenisch ungesättigten Mono- oder Dicarbonsäure in einpolymerisierter Form und eine Polyolverbindung mit wenigstens zwei Hydroxylgruppen.

In der EP-A 2487204 werden wässrige Bindemittel für körnige und/oder faserförmige Substrate offenbart, welche neben einem carbonsäuregruppenhaltigen Polymerisat und einer Polyolverbindung essentiell eine Salzverbindung enthalten. Diese salzhaltigen Bindemittelflotten wirken sich vorteilhaft auf die Nassreißkraft sowie die Reißkraft bei 180 °C der damit gebundenen Faservliese aus.

Darüber hinaus werden in der EP-A 2502944 wässrige Bindemittel für körnige und/oder faserförmige Substrate offenbart, welche neben einem carbonsäuregruppenhaltigen Polymerisat und einer stickstofffreien Polyolverbindung essentiell eine hydroxygruppenfreie organische Stickstoffverbindung mit einem pK_{B}-Wert ≤ 7 enthalten. Die Verwendung dieser Bindemittelflotten wirkt sich vorteilhaft auf die Nassreißkraft sowie die Farbbeständigkeit der damit gebundenen Faservliese aus.

Aus der EP-A 2072578 sind wässrige Bindemittelsysteme für körnige und faserförmige Substrate bekannt, welche aus einem aus Itaconsäure oder einem davon abgeleiteten Derivat und einem weiteren sich hiervon unterscheidenden ethylenisch ungesättigten Monomeren in einpolymerisierter Form aufgebauten Polymerisat und einer wenigstens zwei Hydroxygruppen aufweisenden Polyolverbindung bestehen.

Gegenstand der WO 2013/024084 ist ein Verfahren zur Herstellung eines wässrigen Bindemittelsystems, wobei in einer ersten Verfahrensstufe wenigstens eine ethylenisch ungesättigte Mono- oder Dicarbonsäure in Anwesenheit einer Saccharidverbindung in einem wässrigen Medium radikalisch polymerisiert und danach dem erhaltenen Reaktionsprodukt in einer zweiten Verfahrensstufe ein wenigstens zwei Hydroxygruppen aufweisenden Alkanolamin zugesetzt wird, sowie das wässrige Bindemittelsystem selbst und dessen Verwendung.

U.a. aus den Schriften EP-A 583086 oder EP-A 651088 ist bekannt, dass phosphorhaltige Verbindungen als Beschleuniger bei der thermischen Aushärtung der polymeren Polycarbonsäuren und Polyole enthaltenden wässrigen Bindemittel wirken und dabei die mechnischen Eigenschaften, wie beispielsweise die Nassfestigkeit der aus den körnigen und/oder faserförmigen Substraten erhaltenen Formkörper, verbessern.

Aus der US-A 5294686 ist bekannt, dass Alkalimetallsalzhypophosphite auch als sogenanntes radikalkettenübertragende Verbindungen bei der Herstellung von polymeren Polycarbonsäuren eingesetzt werden, welche das Molekulargewicht der bei der Polymerisation erhaltenen polymeren Polycarbonsäuren und somit die Viskosität der damit hergestellten Polycarbonsäure-Lösungen herabsetzen.

Des Weiteren ist aus der EP-A 1739128 bekannt, dass sich phosphorhaltige Verbindungen, insbesondere Alkalimetallsalzhypophosphite, sowohl zur Herstellung niedermolekularer polymerer Polycarbonsäure wie auch beschleunigend für die anschließende Aushärtungsreaktion eingesetzt werden. Allerdings müssen die relativ teuren Alkalisalzhypophosphite bei Doppelnutzung (Kettenregler/Reaktionsbeschleuniger) in Mengen bis zu 40 Gew.-%, bezogen auf die Gesamtmonomerenmenge, eingesetzt werden.

Aus Kostengründen werden bei der Herstellung niedermolekularer polymerer Polycarbonsäuren durch radikalische Polymerisation ethylenisch ungesättigter Carbonsäuren, wie insbesondere Acrylsäure, Methacrylsäure und Maleinsäure bzw. dessen Anhydrid in wässrigem Medium jedoch vorteilhaft andere radikalkettenübertragende Verbindungen eingesetzt, wie insbesondere anorganische Hydrogensulfitverbindungen. Eigene Untersuchungen belegen jedoch, dass es beim Abmischen von wässrigen Lösungen polymerer Polycarbonsäuren, zu deren Herstellung anorganische Hydrogensulfitverbindungen eingesetzt wurden, mit Polyolen und phosphorhaltigen Verbindungen, insbesondere Alkalisalzhypophosphiten, zu Beinträchtigungen der wässrigen Produktmischungen, wie insbesondere unerwünschte Eintrübungen und einem störenden Schwefelwasserstoffgeruch, kommt. Diese störenden Effekte treten insbesondere dann besonders ausgeprägt auf, wenn der pH-Wert der wässrigen Mischung < 5 ist.

Aufgabe der vorliegenden Erfindung war es daher ein wässriges Bindemittel umfassend eine Polycarbonsäure, ein Polyol und eine Phosphorverbindung zur Verfügung zu stellen, dessen Polycarbonsäure durch radikalische Polymerisation wenigstens einer α,β-monoethylenisch ungesättigten Mono- oder Dicarbonsäure und/oder deren Anhydrid in einem wässrigen Medium in Anwesenheit eines anorganischen Hydrogensulfitsalzes hergestellt wurde, welches in Abmischung mit einer Phosphorverbindung keine oder eine deutlich reduzierte Eintrübung und keinen oder einen deutlich reduzierten Schwefelwasserstoffgeruch aufweist.

Die Aufgabe wurde durch die gemäß dem eingangs definierten Verfahren zugänglichen wässrigen Bindemittel gelöst.

Erfindungsgemäß werden im ersten Verfahrensschritt ≥ 50 und ≤ 100 Gew.-Teile, vorteilhaft ≥ 85 und ≤ 100 Gew.-Teile und insbesondere vorteilhaft 100 Gew.-Teile wenigstens eines Monomeren A1 und ≥ 0 und ≤ 50 Gew.-Teile, vorteilhaft ≥ 0 und ≤ 15 Gew.-Teile und insbesondere vorteilhaft 0 Gew.-Teile wenigstens eines Monomer A2, wobei sich die Gesamtmengen der Monomeren A1 und A2 zu 100 Gew.-Teilen addieren [Gesamtmonomerenmenge], in einem wässrigen Medium in Anwesenheit von ≥ 0,5 und ≤ 50 Gew.-%, bezogen auf die Gesamtmonomerenmenge, wenigstens eines anorganischen Hydrogensulfitsalzes, radikalisch zur Polycarbonsäure A polymerisiert.

Bei den Monomeren A1 handelt es sich um α,β-monoethylenisch ungesättigte, insbesondere C₃- bis C₆-, bevorzugt C₃- oder C₄-Mono- oder Dicarbonsäuren sowie deren voll- oder teilneutralisierten wasserlöslichen Salze, insbesondere deren Alkalimetall- oder Ammoniumsalze. Genannt seien beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure, aber auch Halbester von ethylenisch ungesättigten Dicarbonsäuren, wie Maleinsäuremonoalkylester von C₁- bis C₈-Alkoholen sowie die Ammonium-, Natrium- oder Kaliumsalze der vorgenannten Säuren. Die Monomeren A1 umfassen aber auch die Anhydride entsprechender α,β-monoethylenisch ungesättigter Dicarbonsäuren, wie beispielsweise Maleinsäureanhydrid oder 2-Methylmaleinsäureanhydrid. Bevorzugt ist das Monomer A1 ausgewählt aus der Gruppe umfassend Acrylsäure, Methacrylsäure, Crotonsäure, Fumarsäure, Maleinsäure, Maleinsäureanhydrid, 2-Methylmaleinsäure und Itaconsäure. Mit besonderem Vorteil werden erfindungsgemäß als Monomere A1 jedoch Acrylsäure, Methacrylsäure, Maleinsäure, Maleinsäureanhydrid und/oder Itaconsäure eingesetzt.

Als Monomere A2 kommen alle ethylenisch ungesättigten Monomere in Betracht, welche sich von den Monomeren A1 unterscheiden und mit diesen copolymerisierbar sind. Als Monomere A2 beispielhaft genannt seien vinylaromatische Verbindungen, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome, bevorzugt 2 bis 12 C-Atome aufweisenden Monocarbonsäuren, wie Vinylacetat, Vinylpropionat, Vinyl-n-butyrat, Vinyllaurat und Vinylstearat, C₁- bis C₁₂-Alkylvinylether, wie Methylvinylether, Ethylvinylether, n-Propylvinylether, n-Butylvinylether, n-Pentylvinylether, n-Hexylvinylether, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien (Butadien) und Isopren in Betracht. Die vorgenannten Monomere bilden in der Regel ≥ 50 Gew.-%, bevorzugt ≥ 80 Gew.-% und insbesondere bevorzugt ≥ 90 Gew.-% der Gesamtmenge aller Monomeren A2 und stellen somit die Hauptmonomeren A2 dar. Erfindungsgemäß bevorzugt enthält das Polymerisat A als Hauptmonomer A2 einen Ester der Acrylsäure oder Methacrylsäure mit einem C₁- bis C₁₂-Alkohol, insbesondere Methylacrylat, Ethylacrylat, n-Butylacrylat, 2-Ethylhexylacrylat oder Methylmethacrylat, eine vinylaromatische Verbindung, insbesondere Styrol, ein Nitril einer α,β-monoethylenisch ungesättigten Carbonsäure, insbesondere Acrylnitril und/oder einen Vinylester einer C₂- bis C₁₂-Monocarbonsäure in einpolymerisierter Form.

Weiterhin kommen als Monomere A2 im untergeordnetem Maße solche ethylenisch ungesättigten Monomere in Betracht, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-lmidazolin-2-onyl)ethylmethacrylat. Die vorgenannten Monomere A2 werden in der Regel in Mengen ≤ 10 Gew.-%, bevorzugt ≤ 8 Gew.-% und insbesondere ≤ 5 Gew.-%, jeweils bezogen auf die Gesamtmenge an Monomeren A2, eingesetzt. Als bevorzugtes Monomer wird Acrylamid und/oder Methacrylamid in einer Menge von ≥ 0,5 und ≤ 4 Gew.-%, bezogen auf die Gesamtmenge an Monomeren A2 eingesetzt.

Monomere A2, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Die vorgenannten Monomere A2 werden in der Regel in Mengen ≤ 10 Gew.-%, bevorzugt ≤ 5 Gew.-% und insbesondere ≤ 2 Gew.-%, jeweils bezogen auf die Gesamtmenge an Monomeren A2, eingesetzt.

Als Monomer A2 bevorzugt werden jedoch Methylacrylat, Ethylacrylat, n-Butylacrylat, 2-Ethylhexylacrylat, Methylmethacrylat und/oder Styrol eigesetzt.

Bevorzugt werden zur Polymerisation ≥ 85 und ≤ 100 Gew.-% wenigstens eines Monomeren A1, und ≥ 0 und ≤ 15 Gew.-% wenigstens eines Monomeren A2 eingesetzt. Mit besonderem Vorteil werden zur Polymerisation ≥ 85 und ≤ 100 Gew.-% Acrylsäure, Methacrylsäure, Maleinsäure, Maleinsäureanhydrid und/oder Itaconsäure, insbesondere vorteilhaft Acrylsäure sowie Acrylsäure und Maleinsäureanhydrid und ≥ 0 und ≤ 15 Gew.-% Methylacrylat, Ethylacrylat, n-Butylacrylat, 2-Ethylhexylacrylat, Methylmethacrylat und/oder Styrol eingesetzt.

Insbesondere vorteilhaft werden jedoch zur Polymerisation ausschließlich Monomere A1 eingesetzt, wobei Acrylsäure, Methacrylsäure, Maleinsäure, Maleinsäureanhydrid und/oder Itaconsäure bevorzugt und Acrylsäure bzw. Gemische aus Acrylsäure und Maleinsäureanhydrid besonders bevorzugt sind.

Essentiell für das erfindungsgemäße Verfahren ist, dass die radikalische Polymerisation der Monomeren A1 und A2 in einem wässrigen Medium in Anwesenheit wenigstens eines anorganischen Hydrogensulfitsalzes erfolgt.

Im Rahmen dieser Schrift werden unter einem Hydrogensulfitsalz solche Verbindungen verstanden, welche wenigstens ein Hydrogensulfition (HSO₃⁻) aufweisen und oder in der Lage sind, in einem wässrigen Medium ein solches Hydrogensulfition auszubilden. Hierzu gehören alle Alkalimetall-, Erdalkalimetall- sowie alle Schwermetallhydrogensulfite, wie insbesondere Natriumhydrogensulfit (NaHSO₃), Kaliumhydrogensulfit (KHSO₃), Magnesiumhydrogensulfit (Mg(HSO₃)₂) und/oder Calciumhydrogensulfit (Ca(HSO₃)₂), sowie Metalldisulfite, insbesondere Alkalimetalldisulfite, wie Natriumdisulfit (Na₂S₂O₅) oder Kaliumdisulfit (K₂S₂O₅).

Da in einem wässrigen Medium folgendes Gleichgewicht von Sulfitionen vorliegt 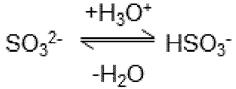 werden auch die wasserlöslichen Metallsalzsulfite, wie beispielsweise Natriumsulfit (Na₂SO₃) und/oder Kaliumsulftit (K₂SO₃) zu den Verbindungen gezählt, welche in der Lage sind, Hydrogensulfitionen auszubilden.

Mit Vorteil werden jedoch erfindungsgemäß Natriumhydrogensulfit und Kaliumhydrogensulfit eingesetzt, wobei Natriumhydrogensulfit insbesondere bevorzugt ist.

Erfindungsgemäß kann die Gesamtmenge des anorganischen Hydrogensulfitsalzes im wässrigen Polymerisationsmedium vor Initiierung der Polymerisationsreaktion vorgelegt werden. Es ist aber auch möglich, gegebenenfalls lediglich eine Teilmenge des Hydrogensulfitsalzes im wässrigen Polymerisationsmedium vor Initiierung der Polymerisationsreaktion vorzulegen und dann unter Polymerisationsbedingungen die Gesamtmenge bzw. die gegebenenfalls verbliebene Restmenge nach Maßgabe des Verbrauchs diskontinuierlich in einer oder mehreren Portionen oder kontinuierlich mit gleich bleibenden oder sich ändernden Mengenströmen zuzugeben. Mit Vorteil wird die Gesamtmenge des Hydrogensulfitsalzes während der Polymerisationsreaktion parallel zur Dosierung der Monomeren A1 und Monomeren A2 mit gleichbleibenden Mengenstrom zugegeben.

Erfindungsgemäß beträgt die Menge an anorganischem Hydrogensulfitsalz ≥ 0,5 und ≤ 50 Gew.-%, vorteilhaft ≥ 5 und ≤ 40 Gew.-% und insbesondere vorteilhaft ≥ 10 und ≤ 30 Gew.-%, jeweils bezogen auf die Gesamtmonomerenmenge.

Erfindungsgemäß vorteilhaft wird die Menge an anorganischem Hydrogensulfitsalz so gewählt wird, dass die resultierende Polycarbonsäure A ein gewichtsmittleres Molekulargewicht von ≤ 80000 g/mol, vorteilhaft ≥ 1000 und ≤ 50000 g/mol und insbesondere ≥ 2000 und ≤ 30000 g/mol aufweist. Im Rahmen der vorliegenden Schrift soll die Bestimmung der gewichtsmittleren Molekulargewichte mittels Gelpermeationschromatographie unter Verwendung von Polyacrylsäurestandards zur Kalibrierung erfolgen.

Die radikalische Polymerisation der Monomeren A1 und A2 erfolgt insbesondere nach der Methode der radikalischen Lösungspolymerisation in einem wässrigen Medium.

Die Methode der radikalisch initiierten Lösungspolymerisation ist dem Fachmann geläufig und erfolgt insbesondere in Wasser oder einem Wasser/Lösungsmittel-Gemisch (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988; L. Kotzeva, J. Polym. Sci. A-27, 1989 (4), Seiten 1325ff; C. Erbil et al., Polymer 41, 2000, Seiten 1391ff; C. Yang, X. Lu Yun, J. Polym. Sci. 75(2), 2000, Seiten 327ff; M. Sen et al., Polymer 40(9), 1999, Seiten 913ff; F. Wang et al., Anal. Chem. 68, 1996, Seiten 2477ff; J. Velada et al., Macromol. Chem. and Phys. 196, 1995, Seiten 3171ff; J.M. Cowie, C. Haq, Br. Polym. J. 9, 1977, Seiten 241ff; J. Velada et al., Polymer Degradation and Stability 52, 1996, Seiten 273ff; A. Horta et al., Makromol. Chem., Rapid Commun. 8, 1987, Seiten 523ff; T. Hirano et al., J. Polym. Sci. A-38, 2000, Seiten 2487ff; B.E. Tate, Adv. Polymer Sci. 5, 1967, Seiten 214ff). Erfolgt dabei die Polymerisation in einem Wasser/Lösungsmittel-Gemisch, so wird in der Regel das organische Lösungsmittel nach Abschluss der Polymerisation zumindest teilweise, vorteilhaft zu ≥ 50 Gew.-% oder ≥ 90 Gew.-% und insbesondere vorteilhaft vollständig entfernt. Die entsprechenden Verfahren hierzu sind dem Fachmann geläufig.

Werden organische Lösungsmittel eingesetzt, so werden vorteilhaft solche Lösungsmittel ausgewählt, die bei 20 °C und Atmosphärendruck eine unbegrenzte Mischbarkeit mit Wasser, wie beispielsweise aliphatische C₁- bis C₅-Alkohole, wie insbesondere Methanol, Ethanol, n-Propanol oder Isopropanol oder aliphatische C₁- bis C₅-Ketone, wie insbesondere Aceton oder Butanon, aufweisen.

Mit besonderem Vorteil erfolgt die Polymerisationsreaktion durch radikalisch initiierte Lösungspolymerisation in einem wässrigen lösungsmittelfreien Medium, insbesondere in entionisiertem Wasser. Dabei wird die Wassermenge so gewählt dass sie ≥ 40 und ≤ 900 Gew.-%, vorteilhaft ≥ 60 und ≤ 700 Gew.-% und insbesondere vorteilhaft ≥ 80 und ≤ 500 Gew.-%, jeweils bezogen auf die Gesamtmonomerenmenge, beträgt.

Entsprechend wird in einem Polymerisationsgefäß wenigstens eine Teilmenge des entionisierten Wassers und gegebenenfalls wenigstens eine Teilmenge des anorganischen Hydrogensulfitsalzes sowie gegebenenfalls eine Teilmenge der Monomeren A1 und A2 vor Initiierung der Polymerisationsreaktion vorgelegt und unter Polymerisationsbedingungen, d.h. nach der Initiierung der Polymerisationsreaktion die gegebenenfalls verbliebenen Restmengen an entionisiertem Wasser sowie die Gesamtmengen bzw. die gegebenenfalls verbliebenen Restmengen des anorganischem Hydrogensulfitsalzes und der Monomeren A1 und A2 dem wässrigen Polymerisationsmedium diskontinuierlich in einer oder mehreren Portionen oder kontinuierlich mit gleichbleibenden oder sich ändernden Mengenströmen zudosiert. Mit besonderem Vorteil wird jedoch wenigstens eine Teilmenge, vorteilhaft ≥ 50 Gew.-% und insbesondere vorteilhaft ≥ 75 Gew.-% der Monomeren A1 und A2 dem wässrigen Medium unter Polymerisationsbedingungen kontinuierlich zugeführt. Ebenfalls mit Vorteil werden ≥ 50 Gew.-%, insbesondere vorteilhaft ≥ 90 Gew.-% und mit besonderem Vorteil die Gesamtmenge des anorganischen Hydrogensulfitsalzes dem wässrigen Reaktionsgemisch während der radikalischen Polymerisation zugegeben.

Die Initiierung der radikalischen Polymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalimetallsulfite, beispielsweise Kalium- und/oder Natriumsulfit, Alkalimetallhydrogensulfite, beispielsweise Kalium- und/oder Natriumhydrogensulfit, Alkalimetalldisulfite, beispielsweise Kalium- und/oder Natriumdisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Sollen die anorganischen Hydrogensulfitsalze sowohl als Reduktionsmittel zur Ausbildung des Radikalinitiators wie auch als radikalkettenübertragende Verbindungen eingesetzt werden, so muss deren Menge so bemessen sein, dass sie sowohl zur Reduktion des radikalbildenden Oxidationsmittels wie auch zur Einstellung des gewünschten Molekulargewichts der Polycarbonsäure A ausreicht und dabei im beanspruchten Mengenbereich liegt. In einem solchen Fall kann - bei Vorliegen einer ausreichenden Menge an anorganischem Hydrogensulfitsalz im wässrigen Polymerisationsmedium - das verwendete Oxidationsmittel alleine zur Initiierung der Polymerisationsreaktion zugegeben werden.

Erfindungsgemäß kann die Gesamtmenge des Radikalinitiators im wässrigen Polymerisationsmedium vor Initiierung der Polymerisationsreaktion vorgelegt werden. Es ist aber auch möglich, gegebenenfalls lediglich eine Teilmenge des Radikalinitiators im wässrigen Polymerisationsmedium vor Initiierung der Polymerisationsreaktion vorzulegen und dann unter Polymerisationsbedingungen die Gesamtmenge bzw. die gegebenenfalls verbliebene Restmenge nach Maßgabe des Verbrauchs diskontinuierlich in einer oder mehreren Portionen oder kontinuierlich mit gleich bleibenden oder sich ändernden Mengenströmen zuzugeben.

Unter Initiierung der Polymerisationsreaktion wird der Start der Polymerisationsreaktion der im wässrigen Polymerisationsmedium vorliegenden Monomeren nach Radikalbildung des Radikalinitiators verstanden. Dabei kann die Initiierung der Polymerisationsreaktion durch Zugabe von Radikalinitiator und der Monomeren A 1 und A2 zum wässrigen Polymerisationsmedium unter Polymerisationsbedingungen erfolgen. Es ist aber auch möglich, dass eine Teil- oder die Gesamtmenge des Radikalinitiators dem gegebenfalls Teilmengen des vorgelegten anorganischen Hydrogensulfitsalzes sowie der Monomeren A1 und A2 enthaltenden wässrigen Polymerisationsmedium unter Bedingungen, welche nicht geeignet sind eine Polymerisationsreaktion auszulösen, beispielsweise bei tiefer Temperatur, zugegeben werden und danach im wässrigen Polymerisationsmedium Polymerisationsbedingungen eingestellt werden. Unter Polymerisationsbedingungen werden dabei generell diejenigen Temperaturen und Drücke verstanden, unter denen die radikalisch initiierte Polymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertszeit < 3 Stunden, vorteilhaft < 1 Stunde und insbesondere vorteilhaft < 0,5 Stunden aufweist und dabei immer genügend Startradikale zur Verfügung stehen, um die Polymerisationsreaktion zu initiieren und aufrechtzuerhalten.

Als Reaktionstemperatur für die erfindungsgemäße radikalisch initiierte Polymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalisch initiierte Polymerisation kann bei einem Druck kleiner, gleich oder größer 1 atm (Atmosphärendruck = 1,01325 bar absolut) durchgeführt werden, so dass die Polymerisationstemperatur 100 °C übersteigen und bis zu 170 °C betragen kann. Dabei kann der Druck 1,2, 1,5, 2, 5, 10, 15 bar (absolut) oder noch höhere Werte einnehmen. Wird die Polymerisationsreaktion im Unterdruck durchgeführt, werden Drücke von 950 mbar, häufig von 900 mbar und oft 850 mbar (absolut) eingestellt. Vorteilhaft wird die erfindungsgemäße radikalisch initiierte Polymerisation bei 1 atm oder bei einem höheren Druck unter Sauerstoffausschluss, beispielsweise unter Inertgasatmosphäre, wie beispielsweise unter Stickstoff oder Argon durchgeführt.

Wesentlich ist, dass beim erfindungsgemäßen Verfahren, neben den vorgenannten Einsatzstoffen, noch weitere übliche Komponenten wie beispielsweise Säuren, Basen oder Puffersysteme zur Einstellung des pH-Wertes, wie beispielsweise Schwefelsäure, Natronlauge oder Ammoniak-Lösung, Extender, wie beispielsweise Polysaccharide, Komplexbildner zum Binden von Schwermetallionen oder Schwermetallkomplexe als Katalysatoren bei der Radikalbildung eingesetzt werden können.

In einer vorteilhaften Ausführungsform erfolgt die Polymerisationsreaktion mittels nicht oder nur teil-neutralisierter (< 50 mol-%) Monomerer A1 bei einem pH-Wert des wässrigen Polymerisationsmediums < 5, vorteilhaft ≤ 4 und insbesondere vorteilhaft ≤ 3. Die pH-Messung bzw. pH-Kontrolle erfolgt dabei direkt in dem wässrigen Polymerisationsmedium bei Polymerisationstemperatur, ggf. mittels einer geeichten HochtemperaturpH-Elektrode, wie beispielsweise einer InPro® 325X der Firma Mettler Toledo.

Mit besonderem Vorteil erfolgt das erfindungsgemäße Verfahren dergestalt, dass die Monomeren A1 und A2 im ersten Verfahrensschritt bis zu einem Umsatz von ≥ 98 Gew.-%, vorteilhaft ≥ 99 Gew.-% und insbesondere vorteilhaft ≥ 99,5 Gew.-% umgesetzt werden. Die Bestimmung des Monomerenumsatzes ist dem Fachmann geläufig und erfolgt insbesondere anhand reaktionskalorimetrischer Methoden. Häufig ist es vorteilhaft, wenn das nach Abschluss der Polymerisationsreaktion erhaltene wässrige Polymerisationsgemisch einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung des wässrigen Polymerisationsgemisches mit Wasserdampf oder Inertgas. Entsprechende chemische und/oder physikalische Methoden sind dem Fachmann geläufig [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115]. Dabei bietet die Kombination aus chemischer und physikalischer Nachbehandlung den Vorteil, dass neben den nicht umgesetzten Monomeren A1 und A2, auch noch andere störende leichtflüchtige organischen Bestandteile (die sogenannten VOCs [volatile organic compounds]) aus dem wässrigen Polymerisationsgemisch entfernt werden.

Nach Abschluss der Polymerisationsreaktion und ggf. erfolgter Nachbehandlung kann das erhaltene wässrige Polymerisationsgemisch durch Zugabe oder Abtrennen von Wasser auf einen Feststoffgehalt ≥ 30 und ≤ 70 Gew.-% eingestellt werden.

Erfindungswesentlich ist jedoch, dass in der erhaltenen Polycarbonsäure-Lösung der Gehalt an freiem, nicht umgesetzten Hydrogensulfit, gerechnet als Natriumhydrogensulfit, vor der Zugabe der Phosphorverbindung C auf eine Menge ≤ 1000 ppm, bezogen auf die Polycarbonsäure-Lösung, reduziert wird. Dabei erfolgt die Bestimmung des Gehaltes an freiem, nicht umgesetztem Hydrogensulfit mittels einer 0,01 M Jodlösung mit Stärke als Indikator.

Zur Reduzierung des Gehaltes an freiem, nicht umgesetzten Hydrogensulfit sind prinzipiell alle Methoden geeignet, welchen den Gehalt an freiem, nicht umgesetzten Hydrogensulfit reduzieren, wie insbesondere chemische und/oder physikalische Methoden.

Als chemische Methode kommt insbesondere der Zusatz entsprechender Oxidationsmittel, wie anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid in Betracht, wobei anorganische Peroxide bevorzugt sind und Wasserstoffperoxid insbesondere bevorzugt ist. Die Reaktion mit Wasserstoffperoxid weist - neben seiner hohen Reaktivität - insbesondere noch den Vorteil auf, dass keine zusätzliche Salzfracht in das wässrige Bindemittel eingebracht wird. Dabei kann die Abreaktion - abhängig von der Reaktivität des Oxidationsmittels - bei Raumtemperatur (20 bis 25 °C) oder bei erhöhter Temperatur erfolgen. Üblicherweise erfolgt die Umsetzung bei Atmosphärendruck, es ist aber auch möglich, dass die Umsetzung bei höheren oder aber auch niedrigeren Drücken durchgeführt wird.

Die Polycarbonsäure-Lösung weist im zweiten Verfahrensschritt vorteilhaft einen pH-Wert < 5, besonders vorteilhaft ≤ 4 und insbesondere vorteilhaft ≤ 3 auf.

Als physikalische Methode kommt insbesondere das Strippen der Polycarbonsäure-Lösung mit einem inerten Gas, wie insbesondere Wasserdampf oder Stickstoff, wobei Wasserdampf besonders bevorzugt ist, in Betracht. Da Hydrogensulfitionen in wässrigem Medium, insbesondere bei einem pH-Wert < 6 folgende Gleichgewichtsreaktionen eingehen können, 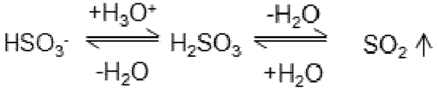 können die Hydrogensulfitionen durch Strippen des Schwefeldioxids aus der Polycarbonsäure-Lösung entfernt werden. Besonders vorteilhaft und effizient kann es daher sein, den Gehalt an Hydrogensulfitionen durch parallele chemische Reaktion und physikalischer Strippung zu reduzieren.

Erfindungswesentlich ist, dass erst nach der Reduzierung des Hydrogensulfit-Gehaltes die Phosphorverbindung C in einem dritten Verfahrensschritt entweder der Polycarbonsäure-Lösung direkt, dem Gemisch aus Polycarbonsäure-Lösung und Polyol B und/oder während der Mischung von Polycarbonsäure-Lösung und Polyol B zugegeben wird.

Als Polyol B können prinzipiell alle organischen Verbindungen eingesetzt werden, welche wenigstens zwei Hydroxygruppen aufweisen. Dabei kann das Polyol B eine Verbindung mit einem Molekulargewicht ≤ 1000 g/mol oder eine polymere Verbindung mit einem Molekulargewicht > 1000 g/mol sein. Als polymere Verbindungen mit wenigstens 2 Hydroxylgruppen seien beispielhaft Polyvinylalkohol, teilhydrolysiertes Polyvinylacetat, Homo- oder Copolymerisate von Hydroxyalkylacrylaten oder Hydroxyalkylmethacrylaten, wie beispielsweise Hydroxyethylacrylat bzw. -methacrylat oder Hydroxypropylacrylat bzw. -methacrylat, aber auch Saccharidverbindungen, wie Mono-, Di-, Oligo- oder Polysaccharidverbindungen und deren Derivate, genannt. Beispiele weiterer erfindungsgemäß einsetzbarer polymerer Polyole B finden sich u.a. in WO 97/45461, Seite 3, Zeile 3 bis Seite 14, Zeile 33.

Als Polyol B mit einem Molekulargewicht ≤ 1000 g/mol kommen alle die organischen Verbindungen in Betracht, die wenigstens 2 Hydroxylgruppen und ein Molekulargewicht ≤ 1000 g/mol aufweisen. Beispielhaft genannt seien Ethylenglykol, 1,2-Propylenglykol, Glyzerin, 1,2- bzw. 1,4-Butandiol, Pentaerythrit, Trimethylolpropan, Sorbit, Saccharose, Glucose, 1,2-, 1,3- bzw. 1,4-Dihydroxybenzol, 1,2,3-Trihydroxybenzol, 1,2-, 1,3- bzw. 1,4-Dihydroxycyclohexan sowie bevorzugt ein Alkanolamin, wie beispielsweise eine Verbindung der allgemeinen Formel (I) 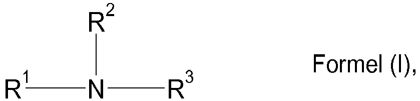 in der R¹ für ein H-Atom, eine C₁- bis C₁₀-Alkylgruppe oder eine C₂- bis C₁₀-Hydroxyalkylgruppe steht und R² und R³ für eine C₂- bis C₁₀-Hydroxyalkylgruppe stehen.

Besonders bevorzugt stehen R² und R³ unabhängig voneinander für eine C₂- bis C₅-Hydroxyalkylgruppe und R¹ für ein H-Atom, eine C₁- bis C₅-Alkylgruppe oder eine C₂-bis C₅-Hydroxyalkylgruppe.

Als Verbindungen der Formel (I) seien insbesondere Diethanolamin, Triethanolamin, Diisopropanolamin, Triisopropanolamin, Methyldiethanolamin, Butyldiethanolamin und/oder Methyldiisopropanolamin genannt.

Beispiele weiterer erfindungsgemäß einsetzbarer Polyole B mit einem Molekulargewicht ≤ 1000 g/mol finden sich ebenfalls in WO 97/45461, Seite 3, Zeile 3 bis Seite 14, Zeile 33. Beispiele weiterer Polyole B mit einem Molekulargewicht ≤ 1000 g/mol sowie > 1000 g/mol finden sich auch in der WO 99/09100, Seite 13, Zeile 29 bis Seite 24, Zeile 32. Durch ihre ausdrückliche Bezugnahme sollen die genannten Polyole B als integraler Bestandteil dieser Schrift angesehen werden.

Bevorzugt ist das Polyol B ein Alkanolamin, welches ausgewählt ist aus der Gruppe umfassend Diethanolamin, Triethanolamin, Diisopropanolamin, Triisopropanolamin, Methyldiethanolamin, Butyldiethanolamin und/oder Methyldiisopropanolamin, wobei Triethanolamin insbesondere bevorzugt ist.

Im erfindungsgemäßen Verfahren wird die Menge des wenigstens einen Polyols B mit Vorteil so gewählt, dass das molare Verhältnis der Carboxylgruppen der wenigstens einen Polycarbonsäure A zu den Hydroxylgruppen des wenigstens einen Polyols B im Bereich ≥ 0,1 und ≤ 10, vorteilhaft im Bereich ≥ 1 und ≤ 8 und insbesondere vorteilhaft im Bereich ≥ 2 und ≤ 6 liegt.

In einer bevorzugten Ausführungsform wird als Polyol B ein Alkanolamin, bevorzugt Triethanolamin, eingesetzt, wobei die Menge so bemessen ist, dass sie ≥ 10 und ≤ 50 Gew.-% und vorteilhaft ≥ 15 und ≤ 35 Gew.-%, jeweils bezogen auf die Menge an Polycarbonsäure A beträgt.

Phosphor enthaltende Reaktionsbeschleuniger sind insbesondere in der EP-A 583086, Seite 6, Zeilen 18 bis 26 und in der EP-A 651088, Seite 5, Zeilen 30 bis 39, offenbart. Durch ihre ausdrückliche Bezugnahme sollen die in den beiden Schriften offenbarten Phosphorverbindungen als in der vorliegenden Schrift offenbarten Phosphorverbindungen C angesehen werden. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren. Mit besonderem Vorteil werden in der vorliegenden Erfindung jedoch Natriumhypophosphit und/oder Natriumhypophosphit-Monohydrat als Phosphorverbindung C eingesetzt.

Dabei beträgt die Menge der wenigstens einen Phosphorverbindung C ≥ 0,1 und ≤ 40 Gew.-%, bevorzugt ≥ 3 und ≤ 20 Gew.-% und besonders bevorzugt ≥ 5 und ≤ 15 Gew.-%, jeweils bezogen auf die Menge an Polycarbonsäure A, wobei im Rahmen dieser Schrift die Menge an Polycarbonsäure A der Summe der Gesamtmengen der zur Herstellung der entsprechenden Menge an Polycarbonsäure A eingesetzten Monomeren A1 und Monomeren A2 entsprechen soll.

Erfindungsgemäß kann die Gesamtmenge der wenigstens einen Phosphorverbindung C der Polycarbonsäure-Lösung unter homogener Mischung zugegeben werden. In diesem Fall wird die Gesamtmenge an Polyol B der wässrigen Mischung aus Polycarbonsäure A und Phosphorverbindung C zugegeben und homogen gemischt. In einer weiteren Ausführungsform werden zuerst die Polycarbonsäure-Lösung und das Polyol B homogen gemischt und danach dieser Mischung die Phosphorverbindung C unter homogener Mischung zugegeben. In einer weiteren Ausführungsform kann die Phosphorverbindung C während der Mischung von Polycarbonsäure-Lösung und Polyol B zugegeben werden. Selbstverständlich sind auch Mischformen der vorgenannten Ausführungsformen möglich. So kann beispielsweise ein Teil des Polyols B zur Gesamtmenge der Polycarbonsäure-Lösung zugegeben werden und die verbleibende Restmenge des Polyols B gemeinsam mit der Gesamtmenge der Phosphorverbindung C diesem Gemisch unter homogener Mischung zudosiert werden. Bevorzugt wird jedoch die Gesamtmenge der wenigstens einen Phosphorverbindung C der Polycarbonsäure-Lösung vor dem Mischen mit dem Polyol B zugegeben.

Die Temperatur, bei welcher die Mischungsvorgänge erfolgen, ist an sich unkrititsch und liegt in der Regel im Bereich ≥ 10 und ≤ 50 °C vorteilhaft im Bereichs 20 und ≤ 30 °C und insbesondere bei Raumtemperatur (20 bis 25 °C).

Von Bedeutung ist, dass die nach dem erfindungsgemäßen Verfahren zugänglichen wässrigen Bindemittel noch anwendungstypische Hilfsmittel, wie beispielsweise Pigmente, Füllstoffe, Koaleszenzmittel, Tenside, Biozide, Plastifizierungsmittel, Antischaummittel, Corrosionsinhibitoren, Antistatika, Säuren, Basen, Puffersubstanzen, Gleitmittel, Antioxidantien, Silan-Kupplungsreagenzien etc. enthalten können, weswegen neben den nicht-additivierten auch die additivierten wässrigen Bindemittel erfindungsgemäß umfasst sein sollen.

Die vorgenannten wässrigen Bindemittel eignen sich vorteilhaft zur Verwendung als Bindemittel für faserförmige und/oder körnige Substrate. Mit Vorteil lassen sich die genannten wässrigen Bindemittel daher zur Herstellung von Formkörpern aus faserförmigen und/oder körnigen Substraten einsetzen.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel, Sand sowie andere organische oder anorganische natürliche und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte mechanisch verfestigte (beispielsweise genadelte) oder chemisch, beispielsweise mit Melamin/Formaldehyd-Harzen vorgebundene Faservliese mit umfassen. Insbesondere vorteilhaft ist das erfindungsgemäße wässrige Bindemittel als formaldehydfreies Bindemittelsystem für die vorgenannten Fasern bzw. daraus gebildete Faservliese, wobei die Faservliese besonders bevorzugt sind, geeignet.

Das Verfahren zur Herstellung eines Formkörpers aus einem körnigen und/oder faserförmigen Substrat und dem vorgenannten wässrigen Bindemittel erfolgt vorteilhaft dergestalt, dass das erfindungsgemäße wässrige Bindemittel gleichmäßig auf das körnige und/oder faserförmige Substrat aufgebracht (imprägniert) wird, gegebenenfalls das mit dem wässrigen Bindemittel imprägnierte körnige und/oder faserförmige Substrat in Form gebracht wird und das imprägnierte körnige und/oder faserförmige Substrat anschließend einem thermischen Behandlungsschritt bei einer Temperatur ≥ 110 °C unterzogen wird.

Die Behandlung (Imprägnierung) des körnigen und/oder faserförmigen Substrats mit dem erfindungsgemäßen wässrigen Bindemittel erfolgt in der Regel dergestalt, dass das erfindungsgemäße wässrige Bindemittel gleichmäßig auf die Oberfläche des körnigen und/oder faserförmigen Substrats aufgebracht wird. Dabei wird die Menge an wässrigem Bindemittel so gewählt, dass pro 100 g körnigem und/oder faserförmigem Substrat ≥ 0,1 g und ≤ 100 g, bevorzugt ≥ 1 g und ≤ 50 g und insbesondere bevorzugt ≥ 5 g und ≤ 30 g Bindemittel, gebildet aus der Summe der Gesamtmengen an Polycarbonsäure A, Polyols B und Phosphorverbindung C (als Feststoff gerechnet) eingesetzt werden. Die Imprägnierung des körnigen und/oder faserförmigen Substrats ist dem Fachmann geläufig und erfolgt beispielsweise durch Tränkung oder durch Besprühen des körnigen und/oder faserförmigen Substrats.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 110 °C, bevorzugt ≥ 20 °C und ≤ 100 °C und insbesondere bevorzugt ≥ 40 und ≤ 100 °C und die Aushärtungsstufe bei einer Temperatur ≥ 110 °C, bevorzugt ≥ 130 und ≤ 250 °C oder ≥ 160 und ≤ 220 °C und insbesondere bevorzugt ≥ 170 °C und ≤ 210 °C erfolgt.

Die Trocknungsstufe erfolgt dabei vorteilhaft dergestalt, dass bei einer Temperatur < 100 °C so lange getrocknet wird, bis das in Form gebrachte imprägnierte körnige und/oder faserförmige Substrat, welches häufig noch nicht seine endgültige Form aufweist (sogenanntes Halbzeug) eine Restfeuchte ≤ 30 Gew.-%, bevorzugt ≤ 15 Gew.-% und insbesondere bevorzugt ≤ 10 Gew.-% aufweist. Dabei wird die Restfeuchte generell bestimmt, indem ca. 1 g des erhaltenen Halbzeugs bei Raumtemperatur gewogen, dieses daran anschließend für 2 Minuten bei 110 °C getrocknet und daran anschließend abgekühlt und wieder bei Raumtemperatur gewogen wird. Dabei entspricht die Restfeuchte der Gewichtsdifferenz des Halbzeugs vor und nach dem Trocknungsvorgang bei 110 °C, bezogen auf das Gewicht des Halbzeugs vor dem Trocknungsvorgang multipliziert mit dem Faktor 100.

Das so erhaltene Halbzeug ist nach Erwärmen auf eine Temperatur von bis ca. 100 °C noch verformbar und kann bei dieser Temperatur in die endgültige Form des gewünschten Formkörpers gebracht werden.

Die nachfolgende Aushärtungsstufe erfolgt vorteilhaft dergestalt, dass das Halbzeug bei einer Temperatur ≥ 110 °C solange erhitzt wird, bis dieses eine Restfeuchte ≤ 2 Gew.-%, bevorzugt ≤ 1 Gew.-% oder ≤ 0,5 Gew.-% und insbesondere bevorzugt ≤ 0,1 Gew.-% aufweist, wobei das Bindemittel in Folge einer chemischen Veresterungsreaktion aushärtet.

Häufig erfolgt die Herstellung der Formkörper dadurch, dass das Halbzeug in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse erfolgen.

Das nach dem erfindungsgemäßen Verfahren zugängliche wässrige Bindemittel weist keine oder eine deutlich geringere Trübungsneigung und keinen oder einen deutlich geringeren Schwefelwasserstoffgeruch auf. Dabei weisen die mit den erfindungsgemäßen wässrigen Bindemitteln hergestellten Formkörper keinerlei Einbußen hinsichtlich ihrer mechanischen Eigenschaften auf.

Die Erfindung soll anhand nachfolgender nicht einschränkender Beispiele erläutert werden.

### Beispiele

### Angewandte Methoden

Die Feststoffgehalte wurden generell bestimmt, indem eine definierte Menge der Polycarbonsäure-Lösung (ca. 1,0 g) für 2 Stunden bei einer Temperatur von 120 °C in einem Umlufttrockenschrank getrocknet und anschließend bei Raumtemperatur zurückgewogen wurde. Es wurden jeweils zwei Messung durchgeführt. Der in den jeweiligen Beispielen angegebene Wert stellt den Mittelwert dieser Messungen dar.

Die Viskositäten wurden generell nach dem Brookfield-Verfahren (ISO 2555, 1989) bei 23 C bestimmt.

Die pH Werte wurden mit einem geeichten Knick Portamess pH-Meter (Typ 911) bei Raumtemperatur bestimmt.

Die Sulfitgehalte wurden durch Titration mit einer 0,01 M wässerigen Jodlösung bestimmt. Hierzu wurden 10,0 g der zu untersuchenden Lösung in einem 250 ml Erlenmeyerkolben mit 50 ml entionisiertes Wasser verdünnt und nach Zugabe von ca. 1 ml einer 1 gew.-%igen wässrigen Stärkelösung mit der Jodlösung titriert.

Die Schwefelwasserstoffgehalte wurden bestimmt, indem ca. 15 bis 20 g der zu untersuchenden Lösung bei Raumtemperatur mit 100 ml entionisiertem Wasser verdünnt und dann mit 10 ml einer 1 molaren wässrigen Natronlaugelösung vermischt wurden. Daran anschließend wurde diese Mischung potentiometrisch mit einer 0,01 molaren wässrigen Silbernitrat-Lösung gegen einer Silber-Titrode (6.0430.100) der Firma Metrohm, USA, titriert.

Die Molekulargewichtsbestimmung erfolgte unter Verwendung von zwei in Reihe geschalteten TSKgel G3000PWxI-Säulen (Länge: 30 cm, Innendurchmesser: 7,8 mm) der Firma Tosoh Bioscience LLC bei einer Temperatur von 35 °C, einem Elutionsmittel (entionisiertes Wasser mit 0,01 mol/l Phosphatpuffer pH-Wert 7,4 und 0,01 mol/l NaN3), einer Durchflussgeschwindigkeit von 0,5 ml pro Minute, einer Injektionsmenge von 100 µl, einer Konzentration der injizierten Lösung von 1 bis 2 mg pro ml sowie einem DRI-Detektor der Firma Agilent Technologies GmbH.

Eine entsprechende Kalibrationskurve wurde unter Verwendung der Polyacrylsäure-Natriumsalz-Standards mit einem Molekulargewichtspeak (Mp) von 900 g/mol und 1770 g/mol der Firma American Polymer Standards Corporation und 1250 g/mol, 2925 g/mol, 7500 g/mol, 16000 g/mol, 28000 g/mol und 82900 g/mol der Firma Polymer Standards Service GmbH erstellt (Software der Firma Polymer Standards Service GmbH). Unter Verwendung der Eichkurve wurden dann die entsprechenden zahlenmittleren Molekulargewichte (Mn) bzw. gewichtsmittleren Molekulargewichte (Mw) der erhaltenen Proben bestimmt.

### Polycarbonsäure 1

In einem 2 I-Glasreaktor, ausgerüstet mit einem Rührer, einem Rückflusskühler und Dosiereinrichtungen wurden bei Raumtemperatur und unter Stickstoffatmosphäre 340 g entionisiertes Wasser vorgelegt und bei Atmosphärendruck unter Rühren auf 95 °C aufgeheizt. Nach Erreichen dieser Temperatur wurden, gleichzeitig beginnend, eine Mischung aus 800 g Acrylsäure und 85 g entionisiertes Wasser innerhalb von 4 Stunden, 400 g einer 40 gew.-%igen wässrigen Lösung von Natriumhydrogensulfit ebenfalls innerhalb von 4 Stunden und 343 g einer 7 gew.-%igen wässrigen Lösung von Natriumpersulfat innerhalb von 4,25 Stunden kontinuierlich mit gleichbleibenden Mengenströmen und unter Rühren und Aufrechterhaltung der vorgenannten Temperatur dem Reaktionsgefäß zudosiert. Anschließend ließ man das Polymerisationsgemisch noch eine Stunde bei vorgenannter Temperatur nachpolymerisieren und kühlte es dann auf Raumtemperatur ab. Die erhaltene wässrige Polyacrylsäurelösung hatte einen pH Wert von 1,96 und wies einen Feststoffgehalt von 52,0 Gew.-% auf. Die Viskosität wurde zu 94 mPas (Spindel 2, 60 UpM, 23 °C) bestimmt. Der Natriumhydrogensulfit-Gehalt wurde zu 0,49 Gew.-% bestimmt. Das zahlenmittlere Molekulargewicht Mn der erhaltenen Polyacrylsäure betrug 1620 g/mol und das gewichtsmittlere Molekulargewicht Mw 2840 g/mol.

Mit der so erhaltenen wässrigen Polyacrylsäure-Lösung wurden folgende Untersuchungen durchgeführt:

### a) direkte Zugaben von Natriumhypophosphit-Monohydrat

In einem 1 I-Glasreaktor, ausgerüstet mit einem Rührer und Dosiereinrichtungen wurden bei Raumtemperatur 515 g der erhaltenen Polyacrylsäure vorgelegt. Anschließend wurden 55 g von einer 59 gew.-%igen wässrigen Lösung von Natriumhypophosphit-Monohydrat innerhalb 10 Minuten unter Rühren zudosiert. Anschließend ließ man das erhaltene Reaktionsgemisch noch 5 Minuten nachrühren. Dabei entstand eine leicht gelbe homogene Trübung. Von dieser trüben Mischung wurden 48,6 g entnommen und der gebildete Feststoff in dieser Probe mittels Ultrazentrifugation (3 Stunden / 50000 U/Min) von der flüssigen Phase abgetrennt. Die Menge an Feststoff wurde durch Auswage zu 71 mg bestimmt. Der Schwefelgehalt im Feststoff wurde durch Elementaranalyse zu 97 Gew.-% bestimmt. Die nach der Ultrazentrifugation erhaltene klare Lösung enthielt noch 60 ppm Schwefelwasserstoff (H₂S) und der Natriumhydrogensulfit-Gehalt wurde zu 0,015 Gew.-% bestimmt.

### b) Zugabe von Natriumhypophosphit-Monohydrat nach Reduktion der Hydrogensulfitmenge

In einem 1 I-Glasreaktor, ausgerüstet mit einem Rührer, einem Rückflusskühler und Dosiereinrichtungen wurden bei Raumtemperatur und unter Stickstoffatmosphäre 587 g der erhaltenen Polyacrylsäure vorgelegt und 2,5 g einer 50 gew.-%igen wässrigen Wasserstoffperoxid-Lösung zugegeben. Die erhaltene Mischung wurde 15 Minuten bei Raumtemperatur gerührt. Anschließend wurden 58 g von einer 59 gew.-%igen wässrigen Lösung von Natriumhypophosphit-Monohydrat innerhalb 10 Minuten unter Rühren zudosiert. Anschließend ließ man das erhaltene Reaktionsgemisch noch 5 Minuten nachrühren. Die dabei erhaltene Polyacrylsäure-Lösung wies keinerlei Trübung auf. Auch konnte kein Schwefelwasserstoff nachgewiesen werden.

### Polycarbonsäure 2

Die Herstellung von Polycarbonsäure 2 erfolgte analog der Herstellung von Polycarbonsäure 1 mit dem Unterschied, dass 200 g anstelle von 400 g einer 40 gew.-%igen wässrigen Lösung von Natriumhydrogensulftit und dass die Acrylsäure/Wassermischung und 125 g anstelle von 85 g entionisiertes Wasser eingesetzt wurden.

Die erhaltene wässrige Polyacrylsäure-Lösung hatte einen pH Wert von 1,45 und wies einen Feststoffgehalt von 52,0 Gew.-% auf. Die Viskosität wurde zu 317 mPas (Spindel 2, 60 UpM, 23 °C) bestimmt. Der Natriumhydrogensulfit-Gehalt wurde zu 0,42 Gew.-% bestimmt. Das zahlenmittlere Molekulargewicht Mn der erhaltenen Polyacrylsäure betrug 2840 g/mol und das gewichtsmittlere Molekulargewicht Mw 6360 g/mol.

Von der erhaltenen Polyacrylsäure-Lösung wurden sieben Proben je 25,0 g entnommen und in verschließbare 50 ml-Messzylinder überführt. Diese Proben wurden bei Raumtemperatur mit der in Tabelle 1 angegebenen Menge einer 59 gew.-%igen wässerigen Natriumhypophosphit-Monohydrat Lösung versetzt, homogen gemischt und dann bei Raumtemperatur gelagert. Die in Abhängigkeit von der Zeit erfolgten Beobachtungen sind in Tabelle 1 zusammengefasst.

**Tabelle 1: Einfluss der Natriumhypophosphit-Monohydrat Menge**

| Menge an NatriumhypoPhosphit- Monohydrat-Lösung [in g] | Beobachtungen |
|---|---|
| 0,059 | Mischung blieb nach Zugabe des Natriumhypophosphits klar, nach 24 Stunden wurde eine leichte Trübung festgestellt, auch nach 40 Tagen war kein H₂S-Geruch wahrnehmbar |
| 0,117 | Mischung blieb nach Zugabe des Natriumhypophosphits klar, nach 14 Stunden wurde eine Trübung festgestellt, auch nach 40 Tagen war kein H₂S-Geruch wahrnehmbar |
| 0,237 | Mischung blieb nach Zugabe des Natriumhypophosphits klar, nach 4 Stunden wurde eine Trübung festgestellt, auch nach 40 Tagen war kein H₂S-Geruch wahrnehmbar |
| 0,470 | Mischung wurde unmittelbar nach Zugabe des Natriumhypophosphits trüb, nach 36 Tagen war ein H₂S-Geruch wahrnehmbar |
| 1,174 | Mischung wurde unmittelbar nach Zugabe des Natriumhypophosphits trüb, nach 29 Tagen war ein H₂S-Geruch wahrnehmbar |
| 2,348 | Mischung wurde unmittelbar nach Zugabe des Natriumhypophosphits trüb, nach 17 Tagen war ein H₂S-Geruch wahrnehmbar |
| 7,044 | Mischung wurde unmittelbar nach Zugabe des Natriumhypphosphits trüb, nach 4 Tagen war ein H₂S-Geruch wahrnehmbar |

Aus Tabelle 1 ist ersichtlich, dass bereits bei Zugabe von sehr geringen Menge an Natriumhypophosphit-Monohydrat (0,3 Gew.-% bezogen auf die Polyacrylsäure) eine Trübung der Polyacrylsäure-Lösung entsteht.

### Polycarbonsäure 3

Eine wässrige Lösung eines Acrylsäure/Maleinsäure-Copolymerisats (Gewichtsverhältnis 70:30) wurde gemäß Beispiel 2 der EP-A 75820 unter Verwendung von Wasserstoffperoxid als Radikalinitiator bei 110 °C hergestellt. Daran anschließend wurde das Polymerisationsgemisch auf 120 °C aufgeheizt, 2 Stunden bei dieser Temperatur gerührt und anschließend auf Raumtemperatur abgekühlt.

Die erhaltene wässrige Copolymerisat-Lösung wies einen pH Wert von 1,0 und einen Feststoffgehalt von 45,1 Gew.-% auf. Die Viskosität wurde zu 101 mPas (Spindel 2, 60 UpM, 23 °C) bestimmt. Das zahlenmittlere Molekulargewicht Mn des erhaltenen Copolymerisats betrug 1560 g/mol und das gewichtsmittlere Molekulargewicht Mw 8510 g/mol.

Von dieser Copolymerisat-Lösung, welche herstellungsbedingt keinerlei Hydrogensulfit enthielt, wurden bei Raumtemperatur jeweils 43,1 g-Proben entnommen und in verschließbare 50 ml-Messzylinder überführt. Diesen Proben wurden bei Raumtemperatur die in Tabelle 3 angegebenen Mengen an Natriumhydrogensulfit in Form einer 40 gew.-%igen wässerigen Lösung zugegeben und homogen vermischt. Danach wurden diesen Proben, ebenfalls bei Raumtemperatur, jeweils 4,08 g von einer 59 gew.-%igen wässerigen Natriumhypophosphit-Monohydrat-Lösung zugegeben und ebenfalls homogen vermischt. Die dabei in Abhängigkeit von der Zeit beobachteten Veränderungen sind Tabelle 3 aufgelistet.

**Tabelle 3: Einfluss der Natriumhydrogensulfit-Menge auf das Trübungsverhalten und die Schwefelwasserstoffentwicklung**

| Menge an Natriumhydrogensulfit-Lösung [in mg] | entsprechend einem Natriumhydrogensulfit-Gehalt [in ppm] | Beobachtungen |
|---|---|---|
| 21,6 | 200 | nach 40 Tagen war keine Trübung und kein H₂S-Geruch wahrnehmbar |
| 53,9 | 500 | nach 40 Tagen war keine Trübung und kein H₂S-Geruch wahrnehmbar |
| 107,8 | 1000 | nach 40 Tagen war keine Trübung und kein H₂S-Geruch wahrnehmbar |
| 129,3 | 1200 | nach 7 Tagen war ein leichter H₂S-Geruch wahrnehmbar, keine Trübung nach 40 Tagen |
| 161,6 | 1500 | nach 3 Tagen war ein leichter H₂S-Geruch wahrnehmbar, keine Trübung nach 40 Tagen |
| 215,5 | 2000 | nach 1 Tag war H₂S-Geruch wahrnehmbar, keine Trübung nach 40 Tagen |
| 431,0 | 4000 | nach 2,5 Stunden sowohl Trübung und H₂S-Geruch wahrnehmbar |
| 646,5 | 6000 | nach 1 Stunde sowohl Trübung und H₂S-Geruch wahrnehmbar |

## Patentansprüche

1. Verfahren zur Herstellung eines wässrigen Bindemittels umfassend wenigstens eine Polycarbonsäure A, wenigstens eine organische Verbindung B, welche wenigstens zwei Hydroxylgruppen aufweist (Polyol B) und wenigstens eine Phosphorverbindung C, **dadurch gekennzeichnet, dass** in einem ersten Verfahrensschritt
| | |
|---|---|
| ≥ 50 und ≤ 100 Gew.-Teile | wenigstens einer α,β-monoethylenisch ungesättigten Mono- oder Dicarbonsäure und/oder deren Anhydrid (Monomer A1), und |
| ≥ 0 und ≤ 50 Gew.-Teile | wenigstens einer anderen ethylenisch ungesättigten Verbindung, welche mit den Monomeren A1 copolymerisierbar ist (Monomer A2), |
wobei sich die Gesamtmengen der Monomeren A1 und A2 zu 100 Gew.-Teilen addieren [Gesamtmonomerenmenge], in einem wässrigen Medium in Anwesenheit von ≥ 0,5 und ≤ 50 Gew.-%, bezogen auf die Gesamtmonomerenmenge, wenigstens eines anorganischen Hydrogensulfitsalzes, radikalisch zur Polycarbonsäure A polymerisiert werden, danach in einem zweiten Verfahrensschritt in der erhaltenen wässrigen Lösung der Polycarbonsäure A (Polycarbonsäure-Lösung) der Gehalt an freiem, nicht umgesetzten Hydrogensulfit, gerechnet als Natriumhydrogensulfit (NaHSO₃), auf eine Menge ≤ 1000 ppm, bezogen auf die Polycarbonsäure-Lösung, reduziert wird und erst danach in einem dritten Verfahrensschritt die Phosphorverbindung C entweder der Polycarbonsäure-Lösung, dem Gemisch aus Polycarbonsäure-Lösung und Polyol B und/oder während der Mischung von Polycarbonsäure-Lösung und Polyol B zugegeben wird.

2. Verfahren nach Anspruch 1, **dadurch gekennzeichnet, dass** der zweite Verfahrensschritt bei einem pH-Wert < 5 erfolgt.

3. Verfahren nach einem der Ansprüche 1 oder 2, **dadurch gekennzeichnet, dass** die Menge der wenigstens einen Phosphorverbindung C ≥ 0,1 und ≤ 40 Gew.-%, bezogen auf die Menge an Polycarbonsäure A, beträgt.

4. Verfahren nach einem der Ansprüche 1 bis 3, **dadurch gekennzeichnet, dass** die Menge an anorganischem Hydrogensulfitsalz so gewählt wird, dass das die resultierende Polycarbonsäure A ein gewichtsmittleres Molekulargewicht von ≤ 80000 g/mol aufweist, ermittelt mittels Gelpermeationschromatographie unter Verwendung von Polyacrylsäurestandards.

5. Verfahren nach einem der Ansprüche 1 bis 4, **dadurch gekennzeichnet, dass** als Monomere A1 Acrylsäure, Methacrylsäure, Maleinsäure, Maleinsäureanhydrid und/oder Itaconsäure, und als Monomere A2 Methylacrylat, Ethylacrylat, n-Butylacrylat, 2-Ethylhexylacrylat, Methylmethacrylat und/oder Styrol eingesetzt werden.

6. Verfahren nach einem der Ansprüche 1 bis 5, **dadurch gekennzeichnet, dass** Natriumhydrogensulfit als anorganisches Hydrogensulfitsalz eingesetzt wird.

7. Verfahren nach einem der Ansprüche 1 bis 6, **dadurch gekennzeichnet, dass** die Reduzierung des freien Gehaltes an anorganischem Hydrogensulfit mittels eines Oxidationsmittels erfolgt.

8. Verfahren nach einem der Ansprüche 1 bis 7, **dadurch gekennzeichnet, dass** die Reduzierung des freien Gehaltes an anorganischem Hydrogensulfit mittels Wasserstoffperoxid erfolgt.

9. Verfahren nach einem der Ansprüche 1 bis 8, **dadurch gekennzeichnet, dass** als Phosphorverbindung C Natriumhypophosphit und/oder Natriumhypophosphit-Monohydrat eingesetzt wird.

10. Verfahren nach einem der Ansprüche 1 bis 9, **dadurch gekennzeichnet, dass** die Gesamtmenge an Phosphorverbindung C der Polycarbonsäure-Lösung vor dem Mischen mit dem Polyol B zugegeben wird.

11. Verfahren nach einem der Ansprüche 1 bis 10, **dadurch gekennzeichnet, dass** die Menge des wenigstens einen Polyols B so gewählt wird, dass das molare Verhältnis der Carboxylgruppen der wenigstens einen Polycarbonsäure A zu den Hydroxylgruppen des wenigstens einen Polyols B im Bereich ≥ 0,1 und ≤ 10 liegt.

12. Verfahren nach einem der Ansprüche 1 bis 11, **dadurch gekennzeichnet, dass** als Polyol B ein Alkanolamin eingesetzt wird.

13. Verfahren nach Anspruch 12, **dadurch gekennzeichnet, dass** die Menge an Alkanolamin ≥ 10 und ≤ 50 Gew.-%, bezogen auf die Menge an Polycarbonsäure A, beträgt.

14. Verfahren nach Anspruch 12 oder 13, **dadurch gekennzeichnet, dass** als Alkonolamin Diethanolamin, Triethanolamin, Diisopropanolamin, Triisopropanolamin, Methyldiethanolamin, Butyldiethanolamin und/oder Methyldiisopropanolamin eingesetzt wird.

15. Wässriges Bindemittel erhältlich nach einem Verfahren gemäß einem der Ansprüche 1 bis 14.

16. Verwendung eines wässrigen Bindemittels gemäß Anspruch 15, zur Herstellung von Formkörpern aus körnigen und/oder faserförmigen Substraten.

17. Verfahren zur Herstellung eines Formkörpers aus einem körnigen und/oder faserförmigen Substrat, **dadurch gekennzeichnet, dass** ein wässriges Bindemittel gemäß Anspruch 15 auf das körnige und/oder faserförmige Substrat aufgebracht wird, gegebenenfalls das mit dem wässrigen Bindemittel behandelte körnige und/oder faserförmige Substrat in Form gebracht wird und anschließend das behandelte körnige und/oder faserförmige Substrat bei einer Temperatur ≥ 110 °C einem thermischen Behandlungsschritt unterzogen wird.

18. Verfahren nach Anspruch 17, **dadurch gekennzeichnet, dass** pro 100 g körnigem und/oder faserförmigem Substrat ≥ 0,1 g und ≤ 100 g wässriges Bindemittel (berechnet als Summe der Gesamtmengen an Polycarbonsäure A, Polyol B und Phosphorverbindung C auf Feststoffbasis) eingesetzt werden.

19. Formkörper erhältlich nach einem Verfahren gemäß einem der Ansprüche 17 und 18.

## Claims

1. A process for producing an aqueous binder comprising at least one polycarboxylic acid A, at least one organic compound B which comprises at least two hydroxyl groups (polyol B), and at least one phosphorus compound C, which comprises carrying out radical polymerization in a first process step of
≥ 50 and ≤ 100 parts by weight of at least one α,β-monoethylenically unsaturated monocarboxylic or dicarboxylic acid and/or the anhydride thereof (monomer A1), and
≥ 0 and ≤ 50 parts by weight of at least one other ethylenically unsaturated compound (monomer A2), which is copolymerizable with the monomers A1,
wherein the total amounts of the monomers A1 and A2 add up to 100 parts by weight [total monomer amount], in an aqueous medium in the presence of ≥ 0.5 and ≤ 50 wt%, based on the total monomer amount, of at least one inorganic hydrogen sulfite salt, to give the polycarboxylic acid A, thereafter, in a second process step in the aqueous solution of the polycarboxylic acid A obtained (polycarboxylic acid solution), reducing the amount of free, unreacted hydrogen sulfite, calculated as sodium hydrogen sulfite (NaHSO₃), to an amount ≤ 1000 ppm, based on the polycarboxylic acid solution, and only thereafter, in a third process step, adding the phosphorus compound C either to the polycarboxylic acid solution, to the mixture of polycarboxylic acid solution and polyol B, and/or during the mixing of polycarboxylic acid solution and polyol B.

2. The process according to claim 1, wherein the second process step takes place at a pH < 5.

3. The process according to either of claims 1 and 2, wherein the amount of the at least one phosphorus compound C is ≥ 0.1 and ≤ 40 wt%, based on the amount of polycarboxylic acid A.

4. The process according to any of claims 1 to 3, wherein the amount of inorganic hydrogen sulfite salt is selected such that the the resulting polycarboxylic acid A has a weight-average molecular weight of ≤ 80 000 g/mol, determined by means of gel permeation chromatography, using polyacrylic acid standards.

5. The process according to any of claims 1 to 4, wherein use is made as monomers A1 of acrylic acid, methacrylic acid, maleic acid, maleic anhydride and/or itaconic acid, and use is made as monomers A2 of methyl acrylate, ethyl acrylate, n-butyl acrylate, 2-ethylhexyl acrylate, methyl methacrylate and/or styrene.

6. The process according to any of claims 1 to 5, wherein use is made as inorganic hydrogen sulfite salt of sodium hydrogen sulfite.

7. The process according to any of claims 1 to 6, wherein the free amount of inorganic hydrogen sulfite is reduced by means of an oxidizing agent.

8. The process according to any of claims 1 to 7, wherein the free amount of inorganic hydrogen sulfite is reduced by means of hydrogen peroxide.

9. The process according to any of claims 1 to 8, wherein use is made as phosphorus compound C of sodium hypophosphite and/or sodium hypophosphite monohydrate.

10. The process according to any of claims 1 to 9, wherein the total amount of phosphorus compound C is added to the polycarboxylic acid solution before the mixing with the polyol B.

11. The process according to any of claims 1 to 10, wherein the amount of the at least one polyol B is selected such that the molar ratio of the carboxyl groups of the at least one polycarboxylic acid A to the hydroxyl groups of the at least one polyol B is in the range ≥ 0.1 and ≤ 10.

12. The process according to any of claims 1 to 11, wherein use is made as polyol B of an alkanolamine.

13. The process according to claim 12, wherein the amount of alkanolamine is ≥ 10 and ≤ 50 wt%, based on the amount of polycarboxylic acid A.

14. The process according to claim 12 or 13, wherein use is made as alkanolamine of diethanolamine, triethanolamine, diisopropanolamine, triisopropanolamine, methyldiethanolamine, butyldiethanolamine and/or methyldiisopropanolamine.

15. An aqueous binder obtainable by a process according to any of claims 1 to 14.

16. The use of an aqueous binder according to claim 15 for producing a shaped article from a granular and/or fibrous substrate.

17. A process for producing a shaped article from a granular and/or fibrous substrate, which comprises applying an aqueous binder according to claim 15 to the granular and/or fibrous substrate, optionally shaping the granular and/or fibrous substrate treated with the aqueous binder, and then subjecting the treated granular and/or fibrous substrate to a thermal treatment step at a temperature ≥ 110°C.

18. The process according to claim 17, wherein ≥ 0.1 g and ≤ 100 g of aqueous binder (calculated as the sum total of the total amounts of polycarboxylic acid A, polyol B, and phosphorus compound C, based on solids) are used per 100 g of granular and/or fibrous substrate.

19. A shaped article obtainable by a process according to either of claims 17 and 18.

## Revendications

1. Procédé de fabrication d'un liant aqueux comprenant au moins un acide polycarboxylique A, au moins un composé organique B, qui comprend au moins deux groupes hydroxyle (polyol B), et au moins un composé de phosphore C, **caractérisé en ce que**, lors d'une première étape de procédé,
≥ 50 et ≤ 100 parties en poids d'au moins un acide mono- ou dicarboxylique α,β-monoéthyléniquement insaturé et/ou son anhydride (monomère A1) et
≥ 0 et ≤ 50 parties en poids d'au moins un autre composé éthyléniquement insaturé, qui est copolymérisable avec les monomères A1 (monomère A2),
la somme des quantités totales des monomères A1 et A2 étant de 100 parties en poids [quantité totale de monomères], sont polymérisés radicalairement dans un milieu aqueux en présence de ≥ 0,5 et ≤ 50 % en poids, par rapport à la quantité totale de monomères, d'au moins un sel d'hydrogénosulfite inorganique, pour former l'acide polyacrylique A, puis, lors d'une deuxième étape de procédé, dans la solution aqueuse de l'acide polycarboxylique A obtenue (solution d'acide polycarboxylique), la teneur en hydrogénosulfite libre non réagi, calculée en tant qu'hydrogénosulfite de sodium (NaHSO₃), est réduite à une quantité ≤ 1 000 ppm, par rapport à la solution d'acide polycarboxylique et, uniquement après, lors d'une troisième étape de procédé, le composé de phosphore C est ajouté à la solution d'acide polycarboxylique, au mélange de la solution d'acide polycarboxylique et du polyol B et/ou pendant le mélange de la solution d'acide polycarboxylique et du polyol B.

2. Procédé selon la revendication 1, **caractérisé en ce que** la deuxième étape de procédé a lieu à un pH < 5.

3. Procédé selon l'une quelconque des revendications 1 ou 2, **caractérisé en ce que** la quantité dudit au moins un composé de phosphore C est ≥ 0,1 et ≤ 40 % en poids, par rapport à la quantité de l'acide polycarboxylique A.

4. Procédé selon l'une quelconque des revendications 1 à 3, **caractérisé en ce que** la quantité de sel d'hydrogénosulfite inorganique est choisie de telle sorte que l'acide polycarboxylique résultant A présente un poids moléculaire moyen en poids ≤ 80 000 g/mol, déterminé par chromatographie par perméation de gel en utilisant un étalon acide polyacrylique.

5. Procédé selon l'une quelconque des revendications 1 à 4, **caractérisé en ce que** l'acide acrylique, l'acide méthacrylique, l'acide maléique, l'anhydride de l'acide maléique et/ou l'acide itaconique sont utilisés en tant que monomères A1, et l'acrylate de méthyle, l'acrylate d'éthyle, l'acrylate de n-butyle, l'acrylate de 2-éthylhexyle, le méthacrylate de méthyle et/ou le styrène sont utilisés en tant que monomères A2.

6. Procédé selon l'une quelconque des revendications 1 à 5, **caractérisé en ce que** l'hydrogénosulfite de sodium est utilisé en tant que sel d'hydrogénosulfite inorganique.

7. Procédé selon l'une quelconque des revendications 1 à 6, **caractérisé en ce que** la réduction de la teneur libre en hydrogénosulfite inorganique a lieu au moyen d'un oxydant.

8. Procédé selon l'une quelconque des revendications 1 à 7, **caractérisé en ce que** la réduction de la teneur libre en hydrogénosulfite inorganique a lieu au moyen de peroxyde d'hydrogène.

9. Procédé selon l'une quelconque des revendications 1 à 8, **caractérisé en ce que** l'hypophosphite de sodium et/ou l'hypophosphite de sodium monohydraté sont utilisés en tant que composé de phosphore C.

10. Procédé selon l'une quelconque des revendications 1 à 9, **caractérisé en ce que** la quantité totale de composé de phosphore C est ajoutée à la solution d'acide polycarboxylique avant le mélange avec le polyol B.

11. Procédé selon l'une quelconque des revendications 1 à 10, **caractérisé en ce que** la quantité dudit au moins un polyol B est choisie de telle sorte que le rapport molaire entre les groupes carboxyle dudit au moins un acide polycarboxylique A et les groupes hydroxyle dudit au moins un polyol B se situe dans la plage comprise entre ≥ 0,1 et ≤ 10.

12. Procédé selon l'une quelconque des revendications 1 à 11, **caractérisé en ce qu'**une alcanolamine est utilisée en tant que polyol B.

13. Procédé selon la revendication 12, **caractérisé en ce que** la quantité d'alcanolamine est ≥ 10 et ≤ 50 % en poids, par rapport à la quantité d'acide polycarboxylique A.

14. Procédé selon la revendication 12 ou 13, **caractérisé en ce que** la diéthanolamine, la triéthanolamine, la diisopropanolamine, la triisopropanolamine, la méthyldiéthanolamine, la butyldiéthanolamine et/ou la méthyldiisopropanolamine sont utilisées en tant qu'alcanolamine.

15. Liant aqueux pouvant être obtenu par un procédé selon l'une quelconque des revendications 1 à 14.

16. Utilisation d'un liant aqueux selon la revendication 15, pour la fabrication de corps moulés à partir de substrats granulaires et/ou fibreux.

17. Procédé de fabrication d'un corps moulé à partir d'un substrat granulaire et/ou fibreux, **caractérisé en ce qu'**un liant aqueux selon la revendication 15 est appliqué sur le substrat granulaire et/ou fibreux, le substrat granulaire et/ou fibreux traité avec le liant aqueux est éventuellement mis en forme, puis le substrat granulaire et/ou fibreux traité est soumis à une étape de traitement thermique à une température ≥ 110 °C.

18. Procédé selon la revendication 17, **caractérisé en ce que**, pour 100 g de substrat granulaire et/ou fibreux, ≥ 0,1 g et ≤ 100 g de liant aqueux (calculé en tant que somme des quantités totales d'acide polycarboxylique A, de polyol B et de composé de phosphore C sous forme solide) est utilisé.

19. Corps moulé pouvant être obtenu par un procédé selon l'une quelconque des revendications 17 et 18.
